# EUROPEAN PATENT APPLICATION

(11) **EP 2 722 631 A1**
(43) Date of publication of application: **23.04.2014**
(21) Application number: 12801073.3
(22) Date of filing: 18.06.2012
(51) Int. Cl.: F28F 5/00, F28D 11/08, F28F 13/00, B01F 9/00, B01F 15/06

(54) **MACHINE FOR HEAT EXCHANGE WITH A PRODUCT**

(30) Priority: 17.06.2011 ES
(71) Applicant: Hrs Investments Ltd., Watford, Hertfordshire WD18 8JY (GB)
(72) Inventor: ABAD RUIZ, Francisco Javier, Watford Hertfordshire WD18 8JY (GB); ALARCÓN GONZÁLEZ, Marcos, Antonio, Watford Hertfordshire WD18 8JY (GB)
(74) Representative: Carpintero Lopez, Francisco
(86) International application number: PCT/ES2012/070451
(87) International publication number: WO 2012/172153

(57) **Abstract**

The present invention relates to a machine for heat exchange with a product, comprising: a tubular recipient (1) internally housing the product, where the tubular recipient (1) comprises a cross-section comprising a U-shaped geometry; at least one thermal device for heating or cooling the product, where said at least one thermal element comprises an inflow duct (2) and an outflow duct (3) for a heat transfer fluid; and at least one scraper blade inside the tubular recipient (1) and configured for entraining the product inside said tubular recipient (1); which allows accelerating the product heating or cooling time as a result of a great improvement in the heat transfer; as well as simplifying the design of the components forming part the machine object of the invention.

## Description

### Technical Field of the Invention

The present invention relates to a machine for heat exchange with a specific product, where said heat exchange includes both heating and cooling processes as well as drying processes, and where the machine for heat exchange object of the invention is encompassed within the field of food preservation and preparation.

The purpose of this machine for heat exchange is to perform tasks of heating, cooling or drying products that can be both foods, in a preferred embodiment, and any other type of products that must be heated or cooled, such as sludge in waste water treatment plants, for example. Said machine also allows simplifying the design thereof with respect to the known state of the art, accelerating product heating or cooling time, cooling or heating the product such that the ratio between the surface of the elements and the volume of the machine is maximum; as well as providing a series of elements that assure the correct operation of the machine object of the invention.

### Background of the Invention

By way of introduction, the use of heat exchangers for heating foods, cooling foods or to change their viscosity is known; in that sense, Spanish utility model ES 0291930 U which relates to a device for continuously cooling or heating fluid or pasty products is known; this device is made up of three concentric recipients closed on one of their bases and open on the opposite base, a rotary disc being placed in the open portion, several arms to which scraper blades of the walls are fastened project from said disc.

A cooling or heating fluid is introduced between the walls of the three recipients for thermally conditioning the fluid or paste placed therein; and where the entrance and exit of the product is carried out from the face to which the three recipients are attached, and it flows from the inner tank until its exit through the outer tank.

The difficulty of said apparatus lies, on one hand, in the fact that the chambers through which the product passes do not have the same dimensions or capacity, so the product residence time in said chambers varies, making it difficult to perform the heating or cooling calculation thereof; additionally the apparatus has a rather limited capacity since it increases proportionally to the diameter of the apparatus, being able to result in a tank with large dimensions.

As the scraper blades wear out, the product gradually adheres to the walls of the recipients whereby making heat transfer and therefore, cooking and/or cooling of the product difficult, the product getting dirty very easily.

Some of the drawbacks set forth are solved by Spanish patent application P200602733 belonging to the same applicant as the present invention. The machine described in said application comprises a cylindrical casing where the foods are treated, and internally comprises at least two thermally conditioned walls and at least one blade moving tightly between both walls; the ratio between the volume of the casing and the thermally treated surface thus increases, emulating conventional cooking appliances.

However, this machine has the drawback that the wall, particularly the upper end of the thermally conditioned wall, is not scraped entirely, and that all the elements for heat treatment of the foods must be made in block, a modular assembly thereof not being possible.

Spanish patent publication number 2333572 belonging to the same applicant is thus known, in which the aforementioned drawbacks are solved, as said patent describes a machine for heat exchange with a product which comprises a cylindrical vat comprising a plurality of separators configured for being coupled to a shaft of the vat, at least one separator being located between two contiguous elements; such that scraper blades which scrape the outer surfaces of the elements and separators in their rotation movement can be located between the two contiguous elements.

However, there are difficulties with respect to product heating or cooling time since it may be excessive depending on the size of the machine or the volume of the product, and also to machine manufacture since the design of some of its components can be complicated or costly to achieve; as well as the difficulty of detecting failures or breakdowns in the system during operation.

In view of the aforementioned drawbacks, it is thus necessary to provide a new machine for heat exchange with a product that allows solving the aforementioned drawbacks, in terms of accelerating product heating or cooling time as a result of an improvement in the heat transfer; simplifying the design of the components to not only reduce the manufacturing cost, but rather to also aid in said heat transfer; as well as being capable of detecting failures or breakdowns in the entire machine during operation.

### Description of the Invention

The present invention relates to a machine for heat exchange with a product, comprising the following technical features:
- A tubular recipient internally housing the product, preferably food, and where said tubular recipient comprises a cross-section comprising a U-shaped geometry;
- at least one thermal device for heating or cooling the product, where said at least one thermal device comprises an inflow duct and an outflow duct for a heat transfer fluid; and
- at least one scraper blade inside the tubular recipient and configured for entraining the product inside said tubular recipient.

The cross-section of the tubular tank which comprises a U-shaped geometry is an essential and novel feature, where this feature must not be considered as a preferred design option but rather as having a series of key technical effects:
1. Such geometry allows creating an air or steam chamber over the area of the product to be heated or cooled; this chamber prevents possible entrainments of the product when steaming is performed, since the dimension of said chamber causes the steam to drop below the critical point in which the entrainments take place; improving the heat transfer and accelerating the process of heating of said product.
2. The geometry of the tubular recipient is simplified compared to the recipients used today in similar machines, since the preferred possibility of the recipient comprising a flat cover closing the U-shaped cross-section is contemplated; and therefore the manufacture thereof is much simpler compared to the manufacture of a curved cover or the like.
3. Furthermore, in addition to the effects of improved heat transfer and simplified manufacturing process, the concept of U-shaped cross-section gives an added value since when said at least one scraper blade rotates, the effect observed in the tubular recipients (usually cylindrical recipients) does not occur since the product in these recipients is entrained with said at least one scraper blade whereby a centrifugal movement of the mass of the product to be heated or cooled is observed. On the contrary, with the U-shaped cross-section that centrifugal movement is broken since the product goes from a cylindrical inner surface to a non-cylindrical portion (in the upper area of the U-shaped cross-section), and no longer follows the centrifugal tendency. This increases the turbulence and disturbance within the material so it no longer behaves in a laminar manner and the heat transfer is therefore substantially improved.

Special attention must be paid to the fact that the U-shaped geometry can be extrapolated to other similar geometries, such as a cross-section having a U-shaped which is beveled in its curved portions, for example, which however also continues to define the air or steam chamber to improve the heat transfer between the heat transfer fluid and the product to be heated or cooled.

In relation to the movements necessary to enable removing the product from inside the tubular recipient, once it is at the desired temperature or viscosity, the following possibility is contemplated:
- Said at least one scraper blade is coupled to a first rotating shaft; and therefore rotates and entrains the product inside the tubular recipient;
- the tubular recipient can rotate a sufficient angle with respect to a second rotating shaft to facilitate discharging the product inside said recipient, such that the opening area of the recipient, preferably in the upper area of the U-shaped cross-section, rotates towards a lower area and allows discharging the product from inside the tubular recipient; and
- where the first rotating shaft can rotate during the product heating or cooling phase, such that the correct heat transfer of the product to said at least one thermal device or vice versa is assured; and can rotate during the product discharge regardless of the rotation of the second rotating shaft; therefore, once the product discharge phase is performed, said at least one scraper blade continues to rotate to facilitate complete product discharge, reducing the time of the discharge phase and assuring the correct and complete discharge of said product.

Furthermore in relation to the thermal device, the possibility of said thermal device comprising the following elements is contemplated:
- A plurality of separator elements defining the inflow and outflow ducts for the heat transfer fluid inside the tubular recipient; and
- a plurality of plate elements, located between a pair of separator elements, and where said plate elements are hollow and allow the passage of the heat transfer fluid to and from the inflow and outflow ducts for the heat transfer fluid that are defined in each separator element, respectively.

In this manner, part of the technical features described in Spanish patent 2333572 belonging to the same applicant are taken and applied in the machine for heat exchange object of the invention, but with the advantage that the new machine comprises the technical features of the U-shaped cross-section and with the advantageous technical effects it entails.

For the sake of clarification, the tubular recipient internally comprises the plurality of separator elements, where said elements define the inflow and outflow ducts for the heat transfer fluid inside the tubular recipient; i.e., there are implicitly two ducts, one inflow duct and another outflow duct for the heat transfer fluid that comes from the outside and enters the tubular recipient by respective tubular ducts, such that once inside the recipient, the heat transfer fluid flows through the ducts defined by the separator elements and heats or cools the product inside the recipient. Additionally, the plurality of plate elements, which are located between a pair of separator elements, are hollow and allow the passage of the heat transfer fluid to and from the inflow and outflow ducts for the heat transfer fluid defined in each separator element, respectively, they therefore distribute the heat transfer fluid throughout the entire possible inner volume both to the separator elements and to the plate elements, assuring a correct heat transfer to the product to be heated or cooled.

Furthermore, both the separator elements and the plate elements preferably comprise a cylindrical geometry, such that the plate elements cover the entire lower U-shaped cross-section of the tubular recipient.

In relation to the improvement in the service life and effectiveness of the machine for heat exchange object of the invention, the different possibilities that are completely complementary to one another are contemplated:
1. At least one separator element comprises a ventilation duct configured for extracting air and incondensable fluids; i.e., the ventilation duct is located in at least one separator element and communicates the ducts for the heat transfer fluid with the outside, preventing the discharge of fluid but allowing the discharge of occluded gases that may be detrimental to the correct heat transfer between the heat transfer fluid and the product to be heated or cooled; improving the overall yield of the machine without incurring a high cost for forming said hole; said at least one separator element hence comprises holes for the entrance and exit of the heat transfer fluid, as well as the described ventilation duct.
2. At least one separator element comprises a detector duct for detecting product or heat transfer fluid leaks, in this case the function of said duct is to obtain an external warning that one of the gaskets making up the separator element/plate element assembly has broken down or requires maintenance, since the operator can observe through said detector duct a possible leak of the heat transfer fluid or product to be treated; hence along with the preceding possibility, said at least one separator element comprises holes for the entrance and exit of the heat transfer fluid, the ventilation duct and the described detector duct for detecting leaks.

The possibility of the tubular recipient comprising at least a first hole communicating the inside of the tubular recipient with the outside is contemplated, and where said first hole is configured for injecting steam into the tubular recipient, said at least a first hole therefore significantly increases the heat transfer, while at the same time increases the turbulence in the fluid. Furthermore, it additionally allows having the entire heat load of the heat transfer fluid directly inside the product, i.e., without having to transfer through a metal wall; thus preventing energy losses due to the resistance characteristic of the metal material between one fluid and another.

Similarly, the possibility of the tubular recipient comprising at least a second hole communicating the inside of the tubular recipient with the outside, and configured for injecting reactive gasses into the tubular recipient is contemplated. Furthermore, this preferred embodiment successfully catalyzes reactions or modifies characteristics of the product to be treated, such as modifications with respect to properties, flavors, aromas, etc. To perform these injections said at least a second hole has been arranged such that it can coincide with the first hole described above for steam injection.

Special attention must be paid to the nomenclature used because even though the existence of a first hole has been described, this does not mean that there must necessarily be a second hole, rather the first hole can exist independently, the second hole can also exist independently, or the respective holes can exist together.

The possibility of the tubular recipient being able to rotate a sufficient angle with respect to a second rotating shaft to facilitate discharging the product inside said recipient is contemplated, as indicated above; and where said second rotating shaft comprises at least one pneumatic cylinder responsible for fixing the loading and discharging positions of said tubular recipient; such that there is no joint relative movement between the tubular recipient and the machine when said at least one scraper blade moves; since using at least one pneumatic cylinder during the treatment and final discharge phase is a safer and more reliable method than using, for example, two electric pistons that are commonly used; since in the current machines, the fixing with electric pistons may cause more problems and breakdowns, where two units are commonly used in each machine depending on the size; and due to the need of having two units and that they must both give open signal to enable rotating the tubular recipient, it already has twice as many possibilities of failure compared to the case of having at least one pneumatic cylinder such as in the machine object of the invention described.

Additionally, and in relation to said at least one scraper blade; the possibility of it being located between the following elements is contemplated:
- two plate elements, or
- a plate element and an inner side wall of the tubular recipient,
such that said at least one scraper blade contacts the adjoining surfaces, entraining and moving the product through the inside of the tubular recipient.

Furthermore, to achieve an effective entrainment that does not prevent the heating of the product inside the tubular recipient, the possibility of said at least one scraper blade is being coupled to a rotary structure outside the plurality of plate elements and inside the tubular recipient is contemplated; such that it does not interfere or contact the plate elements, surrounding them and allowing said at least one scraper blade to be located between two plate elements or between a plate element and an inner side surface of the tubular container.

Therefore, according to the described invention the machine for heat exchange with a product, preferably food, constitutes an important novelty in machines also intended for heat exchange with specific products to be treated, and allows accelerating the product heating or cooling time as a result of an improved heat transfer; simplifying component design such that it does not only reduce the manufacturing cost, but rather additionally aids in said heat transfer; as well as being capable of detecting failures or breakdowns in the entire machine during operation.

### Description of the Drawings

To complement the description that is being made and for the purpose of aiding to better understand the features of the invention according to a preferred practical embodiment thereof, a series of drawings is attached as an integral part of said description in which the following is depicted with illustrative and non-limiting character:
Figure 1 shows a schematic perspective view of the tubular container the cross-section of which comprises a U-shaped geometry.
Figure 2 shows a schematic perspective view of the product discharge phase for discharging the product inside the tubular container.
Figure 3 shows a schematic view of a separator element inside the tubular container with the respective holes for fluid passage, ventilation and detection of possible leaks.
Figure 4 shows a perspective view of the machine object of the invention with respective first and second hole for introducing gases into the tubular container.
Figure 5 shows a perspective view of the area of the second rotating shaft suitable for rotating the tubular container, as well as a pneumatic cylinder responsible for performing such movement.

### Preferred Embodiment Of The Invention

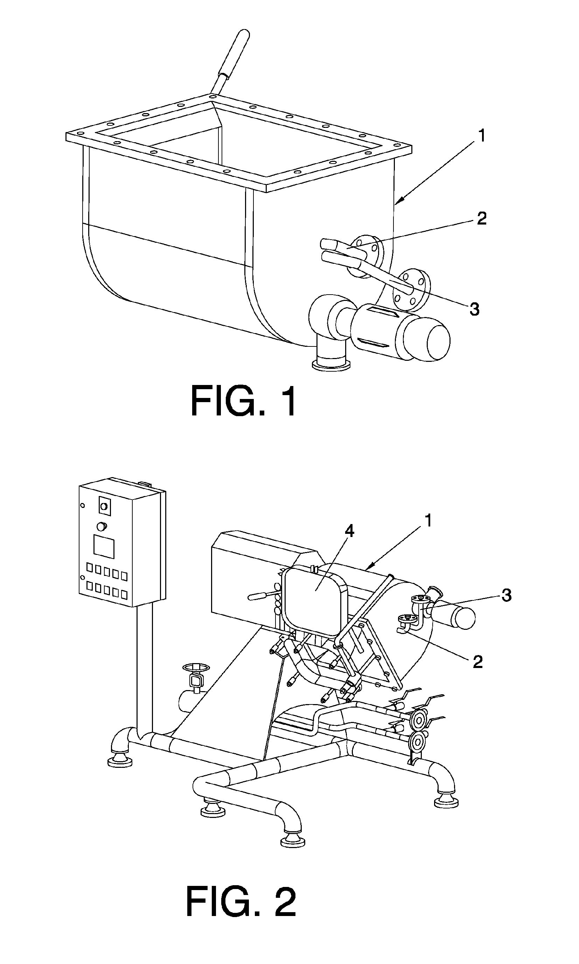

As can be seen in Figures 1 to 5, the machine for heat exchange with a food product described in the invention comprises:
- A tubular recipient (1) internally housing the product, and where said tubular recipient (1) has the essential feature of having a cross-section which comprises a U-shaped geometry;
- a flat cover (4) closing the top portion of the U-shaped cross-section of the tubular recipient (1), which can be seen in Figure 2 in open position, suitable for allowing the discharge of the food product inside the tubular recipient (1);
- a thermal device for heating or cooling the product, where said thermal device comprises an inflow duct (2) and an outflow duct (3) for a heat transfer fluid, said ducts are seen in Figure 1 with the corresponding projecting pipes to be coupled to a tank internally comprising the heat transfer fluid; and
- a plurality of scraper blades inside the tubular recipient (1) configured for entraining the product inside said tubular recipient (1); where said scraper blades are not illustrated in the drawings since their isolated use is very well-known today.

Figure 2 shows how the machine object of the study can be seen in the food product discharge phase for discharging the food product inside the container, and it is observed that in order to reduce the discharge time, and improve effectiveness:
- the plurality of scraper blades are coupled to a first rotating shaft;
- the tubular recipient (1) can rotate a sufficient angle with respect to a second rotating shaft (5) to facilitate discharging the product inside said tubular recipient (1); and
- the first rotating shaft can rotate during the product heating or cooling phase, and can rotate during the product discharge regardless of the rotation of the second rotating shaft (5); causing the scraper blades to continue to rotate during the discharge to aid in and facilitate discharging the food product inside the tubular container (1).

According to a preferred embodiment, the thermal device comprises:
- a plurality of separator elements (6) defining the inflow duct (6a) and outflow duct (6b) for the heat transfer fluid inside the tubular recipient (1); and
- a plurality of plate elements located between a pair of separator elements (6), and where said plate elements are hollow and allow the passage of the heat transfer fluid to and from the inflow and outflow ducts for the heat transfer fluid that are defined in each separator element (6), respectively.

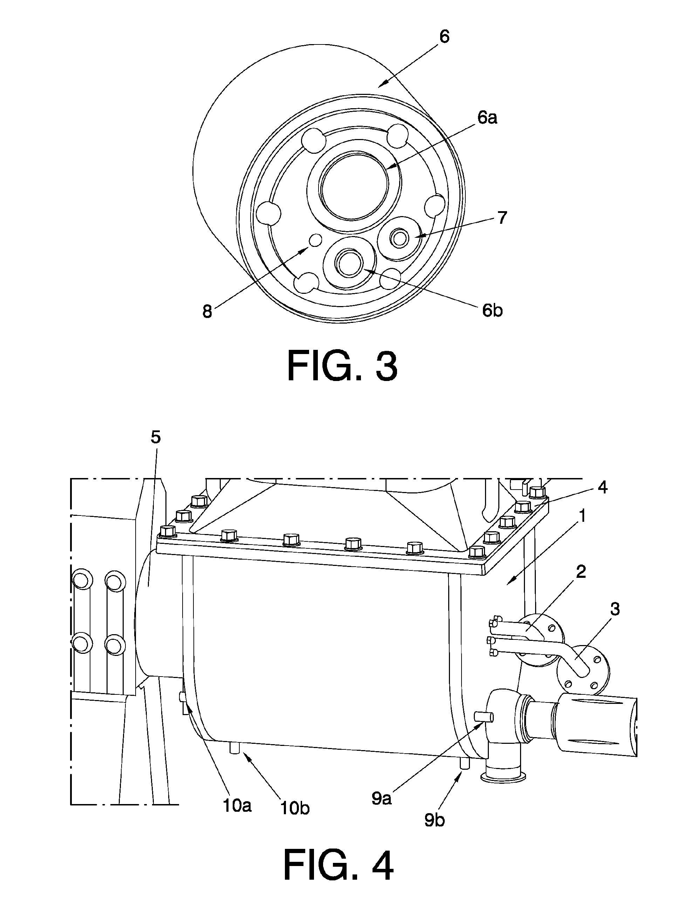

Furthermore, Figure 3 shows how each separator element (6) comprises:
1. An inflow duct (6a) for the heat transfer fluid.
2. An outflow duct (6b) for the heat transfer fluid.
3. A ventilation duct (7) configured for extracting air and incondensable fluids.
4. A detector duct (8) for detecting product or heat transfer fluid leaks.

In terms of the possibility of injecting gases into the tubular recipient (1), the following possibility is contemplated:
- The tubular recipient (1) comprises a first inflow hole (9a) communicating the inside of the tubular recipient (1) with the outside, and configured for injecting steam into the tubular recipient (1), as well as the respective outflow hole (9b) for assuring a correct volume of steam inside the tubular recipient (1); and
- the tubular recipient (1) comprises a second hole (10a) communicating the inside of the tubular recipient (1) with the outside, and configured for injecting reactive gasses into the tubular recipient (1), as well as the respective outflow hole (10b) for assuring a correct volume of reactive gasses inside the tubular recipient (1).

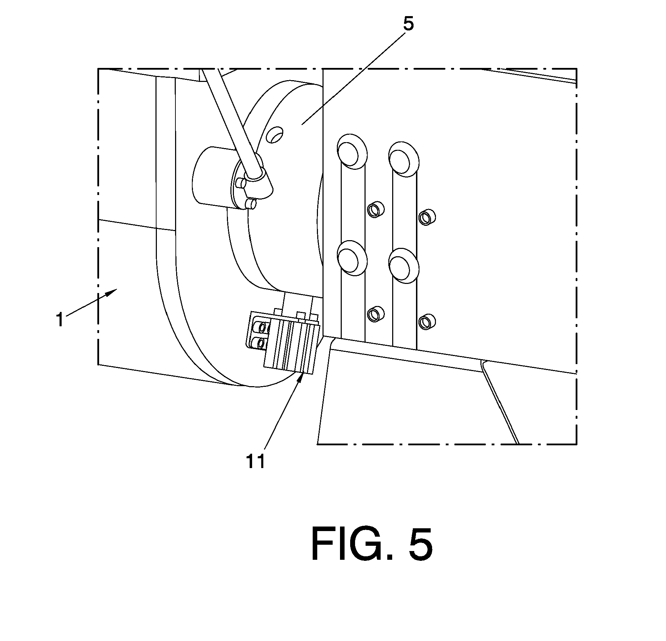

Finally, Figure 5 shows that, as described above, the tubular recipient (1) can rotate a sufficient angle with respect to the second rotating shaft (5) to facilitate discharging the product inside said recipient; and where said second rotating shaft (5) comprises a pneumatic cylinder (11) responsible for fixing the loading and discharging positions of said tubular recipient (1); such that there is no joint relative movement between the tubular recipient (1) and the machine when said at least one scraper blade moves, improving the fixing devices used today, which are limited to electric pistons.

In view of this description and set of drawings, the person skilled in the art will understand that the embodiments of the invention which have been described can be combined in many ways within the object of the invention. The invention has been described according to several preferred embodiments thereof, but for the person skilled in the art it will be evident that multiple variations can be introduced in said preferred embodiments without exceeding the object of the claimed invention.

## Claims

1. Machine for heat exchange with a product, comprising:
a tubular recipient (1) internally housing the product,
at least one thermal device for heating or cooling the product, where said at least one thermal device comprises an inflow duct (2) and an outflow duct (3) for a heat transfer fluid; and
at least one scraper blade inside the tubular recipient (1) and configured for entraining the product inside said tubular recipient (1);
the device being **characterized in that** the tubular recipient (1) comprises a cross-section comprising a U-shaped geometry.

2. Machine for heat exchange with a product according to claim 1, **characterized in that** the tubular recipient (1) comprises a flat cover (4) closing the top portion of the U-shaped cross-section.

3. Machine for heat exchange with a product according to any of the preceding claims, **characterized in that**
said at least one scraper blade is coupled to a first rotating shaft;
the tubular recipient (1) can rotate a sufficient angle with respect to a second rotating shaft (5) to facilitate discharging the product inside said tubular recipient (1); and
where the first rotating shaft can rotate during the product heating or cooling phase, and can rotate during the product discharge regardless of the rotation of the second rotating shaft (5).

4. Machine for heat exchange with a product according to any of the preceding claims, **characterized in that** the thermal device comprises
a plurality of separator elements (6) defining the inflow duct (6a) and outflow duct (6b) for the heat transfer fluid inside the tubular recipient (1); and
a plurality of plate elements located between a pair of separator elements (6), and where said plate elements are hollow and allow the passage of the heat transfer fluid to and from the inflow and outflow ducts for the heat transfer fluid that are defined in each separator element (6), respectively.

5. Machine for heat exchange with a product according to claim 4, **characterized in that** at least one separator element (6) comprises a ventilation duct (7) configured for extracting air and incondensable fluids.

6. Machine for heat exchange with a product according to any of claims 4 and 5, **characterized in that** at least one separator element (6) comprises a detector duct (8) for detecting product or heat transfer fluid leaks.

7. Machine for heat exchange with a product according to any of the preceding claims, **characterized in that** the tubular recipient (1) comprises at least a first hole (9a) communicating the inside of the tubular recipient (1) with the outside, and configured for injecting steam into the tubular recipient (1).

8. Machine for heat exchange with a product according to any of the preceding claims, **characterized in that** the tubular recipient (1) comprises at least a second hole (10a) communicating the inside of the tubular recipient (1) with the outside, and configured for injecting reactive gasses into the tubular recipient (1).

9. Machine for heat exchange with a product according to any of the preceding claims, **characterized in that** the tubular recipient (1) can rotate a sufficient angle with respect to a second rotating shaft (5) to facilitate discharging the product inside said recipient; where said second rotating shaft (5) comprises at least one pneumatic cylinder (11) responsible for fixing the loading and discharging positions of said tubular recipient (1).

10. Machine for heat exchange with a product according to claim 3 and any of the preceding claims, **characterized in that** said at least one scraper blade is located between two plate elements or a plate element and an inner side wall of the tubular recipient (1), such that said at least one scraper blade contacts with the adjoining surfaces entraining and moving the product through the inside of the tubular recipient (1).

11. Machine for heat exchange with a product according to claim 10, **characterized in that** said at least one scraper blade is coupled to a rotary structure outside the plurality of plate elements, and inside the tubular recipient (1).

12. Machine for heat exchange with a product according to any of the preceding claims, **characterized in that** the product to be heated or cooled is a food product.
